# EUROPEAN PATENT APPLICATION

(11) **EP 3 929 834 A1**
(43) Date of publication of application: **29.12.2021**
(21) Application number: 21151678.6
(22) Date of filing: 14.01.2021
(51) Int. Cl.: G06Q 10/06, G06Q 10/10

(54) **COMPUTER-IMPLEMENTED CONFERENCE RESERVATION METHOD AND APPARATUS, DEVICE, AND MEDIUM**

(30) Priority: 22.06.2020 CN 202010577404
(71) Applicant: Beijing Baidu Netcom Science and Technology Co., Ltd., Beijing 100085 (CN)
(72) Inventor: SUN, Ke, BEIJING, Beijing 100085 (CN); LIU, Ying, BEIJING, Beijing 100085 (CN); ZHAO, Yuanyuan, BEIJING, Beijing 100085 (CN); WANG, Chao, BEIJING, Beijing 100085 (CN); SONG, Yingzhuo, BEIJING, Beijing 100085 (CN); GAO, Shuai, BEIJING, Beijing 100085 (CN); LIU, Jing, BEIJING, Beijing 100085 (CN); WEI, Di, BEIJING, Beijing 100085 (CN); SUN, Huifeng, BEIJING, Beijing 100085 (CN); HU, Jianglu, BEIJING, Beijing 100085 (CN); GUO, Haohao, BEIJING, Beijing 100085 (CN)
(74) Representative: Laqua, Bernd Christian Kurt

(57) **Abstract**

The present application discloses a computer-implemented conference reservation method, a conference reservation apparatus, an electronic device and a storage medium, which relate to the field of natural language processing. The method comprises: receiving a conference reservation request that is initiated by a conference organizer to reserve a conference, the conference reservation request being a text input or a speech input from the conference organizer; parsing, by means of a dialog understanding technology, the conference reservation request to obtain predefined elements of the conference, the predefined elements comprising a list of participants; determining, according to a pre-recorded schedule of the participants, a period of time during which all the participants are idle as a conferencing time; generating a conference invitation message, the conference invitation message specifying the conferencing time; and sending the conference invitation message to the participants.

## Description

### Technical Field

The present disclosure relates to natural language processing, and in particular to a computer-implemented conference reservation method, a conference reservation apparatus, an electronic device, and a storage medium.

### Background Art

With the development of network technology, various forms of conferences are common in people's life, work, and study. In order to organize a conference, before the start of the conference, a conference organizer needs to manually query and record the idle time of each participant, and then repeatedly communicate with each participant for confirmation, which consumes much time and effort of the conference organizer.

### Summary of the Invention

According to one aspect of the present disclosure, a computer-implemented conference reservation method is provided. The method comprises: receiving a conference reservation request that is initiated by a conference organizer to reserve a conference, the conference reservation request being a text input or a speech input from the conference organizer; parsing, by means of a dialog understanding technology, the conference reservation request to obtain predefined elements of the conference, the predefined elements comprising a list of participants; determining, according to a pre-recorded schedule of the participants, a period of time during which all the participants are idle as a conferencing time; generating a conference invitation message, the conference invitation message specifying the conferencing time; and sending the conference invitation message to the participants.

According to another aspect of the present disclosure, a conference reservation apparatus is provided. The apparatus comprises: a receiving module configured to receive a conference reservation request that is initiated by a conference organizer to reserve a conference, the conference reservation request being a text input or a speech input from the conference organizer; a parsing module configured to parse, by means of a dialog understanding technology, the conference reservation request to obtain predefined elements of the conference, the predefined elements comprising a list of participants; a determination module configured to determine, according to a pre-recorded schedule of the participants, a period of time during which all the participants are idle as a conferencing time; a generation module configured to generate a conference invitation message, the conference invitation message specifying the conferencing time; and a sending module configured to send the conference invitation message to the participants.

According to another aspect of the present disclosure, an electronic device is provided. The electronic device comprises: a processor and a memory storing a program, the program comprising instructions that, when executed by the processor, cause the processor to perform the computer-implemented conference reservation method above.

According to another aspect of the present disclosure, a computer-readable storage medium storing a program is provided, the program comprising instructions that, when executed by a processor of an electronic device, cause the electronic device to perform the computer-implemented conference reservation method above.

### Brief Description of the Drawings

Embodiments are shown exemplarily in the drawings and form part of the specification together with a written description of the specification to explain the exemplary implementations of the embodiments. The embodiments shown are merely for illustrative purposes and do not limit the scope of the claims. Throughout the drawings, like reference signs denote like but not necessarily identical elements:
Fig. 1 shows a schematic diagram of an example environment in which various technologies described herein may be implemented according to an exemplary embodiment of the present disclosure;
Fig. 2 shows a flowchart of a computer-implemented conference reservation method according to an exemplary embodiment of the present disclosure;
Figs. 3 and 4 show a flowchart of an example process of determining a conferencing time in the method of Fig. 2;
Fig. 5 shows a schematic block diagram of a conference reservation apparatus according to an exemplary embodiment of the present disclosure; and
Fig. 6 shows a schematic block diagram of an example computing device according to an exemplary embodiment of the present disclosure.

### Detailed Description of Embodiments

In the present disclosure, unless otherwise stated, the terms "first", "second", etc., used to describe various elements are not intended to limit the positional, temporal or importance relationship of these elements, but rather only to distinguish one component from the other. In some examples, the first element and the second element may point to the same instance of the element, and in some cases, based on contextual descriptions, they may also refer to different instances.

The terms used in the description of the various examples in the present disclosure are merely for the purpose of describing particular examples, and are not intended to be limiting. If the number of elements is not specifically defined, it may be one or more, unless otherwise expressly indicated in the context. Moreover, the term "and/or" used in the present disclosure encompasses any of and all possible combinations of listed items. For example, A and/or B may represent the following three cases: only A exists, both A and B exist, and only B exists. In addition, the character "/" herein generally indicates an "or" relationship between the associated obj ects.

In order to organize or reserve a conference, a conference organizer needs to separately retrieve the idle time of each participant through the schedule or calendar, and use the idle time as a reference to determine a proposed conferencing time. Then, based on the proposed conferencing time, the conference organizer separately communicates with all the participants to confirm whether they can participate in the conference within the proposed conferencing time. In the case of a plurality of participants, repeated communication with each participant to confirm the conferencing time consumes more time and effort of the conference organizer. How to efficiently and quickly coordinate with each participant and determine an appropriate conference time before the start of the conference is a problem that needs to be solved.

The present disclosure provides a computer-implemented conference reservation method, in which a computer (e.g. an intelligent session robot) completes the conference reservation in place of a conference organizer. The intelligent session robot involves several aspects of: natural language recognition (ASR), natural language processing (NLU), multi-round dialog management (DM), and natural language generation (TTS). The multi-round dialog management refers to being responsible for integrating the result (e.g. information such as an intent and slots) of each round of dialog understanding (SLU) to maintain the dialog state of the entire multi-round dialog, and deciding, from a series of procedures such as dialog state tracking, system action generation and natural language generation, what type of business procedure should be performed, and how the robot should respond to. During the entire process of determining a conferencing time, the conference organizer only needs to inform the intelligent session robot of a conference reservation request, and the intelligent session robot will "communicate" and coordinate with each participant to determine a final conferencing time, so that the time and effort of the conference organizer are reduced. Moreover, during the entire process of determining the conferencing time, communication with each participant is carried out to confirm the conferencing time, so that each participant participates in the process of determining the conferencing time, instead of unidirectionally and passively accepting the specified conferencing time, which improves the user experience.

Embodiments of the present disclosure are described in detail below in conjunction with the drawings.

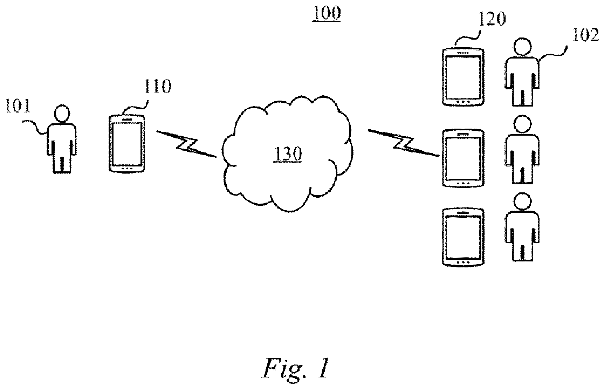

Fig. 1 shows a schematic diagram of an example environment 100 in which various technologies described herein may be implemented. As shown in Fig. 1, the environment 100 comprises: a first user 101, a first computing device 110, a plurality of second users 102, a second computing device, and a network 130. The example environment 100 shown in Fig. 1 can be applied to any place where there is a conferencing requirement, for example, including, but not limited to, the requirement of enterprise and public institutions for training, of school organizations for learning, and of government agencies for reporting, etc. In the example of Fig. 1, the first user 101 may be a conference organizer, and the second user 102 may be a participant. In other examples, the first user 101 may also be one of the participants.

The conference organizer 101 is equipped with the first computing device 110, and may initiate sessions and receive messages through the first computing device 110. For example, the conference organizer 101 may make a session with an intelligent reservation robot through the first computing device 110, and send a conference reservation request for conference reservation. Each of the one or more participants 102 is equipped with a second computing device 120, and can make sessions and receive messages through the second computing device 120. For example, the participant 102 may receive a conference invitation message through the second computing device 120. The first computing device 110 may communicate with the second computing device 120 through the network 130.

In some embodiments, the first computing device 110 and the second computing device 120 in the environment 100 may be any type of mobile computing devices, including mobile computers or mobile computing devices (e.g. personal digital assistants (PDAs), laptop computers, notebook computers, tablet computers, netbooks, etc.), mobile phones (e.g. cellular phones, smart phones, Apple iPhones, phones that implement Google^{®} and Android^{™} operating systems, Palm^{®} devices, Blackberry^{®} devices, etc.), wearable computing devices (e.g. smart watches, head-mounted devices, including smart glasses such as Google^{®}Glass^{™}, etc.), or other types of mobile devices. Examples of the network 130 comprise a combination of a local area network (LAN), a wide area network (WAN), a personal area network (PAN), and/or a communication network such as the Internet.

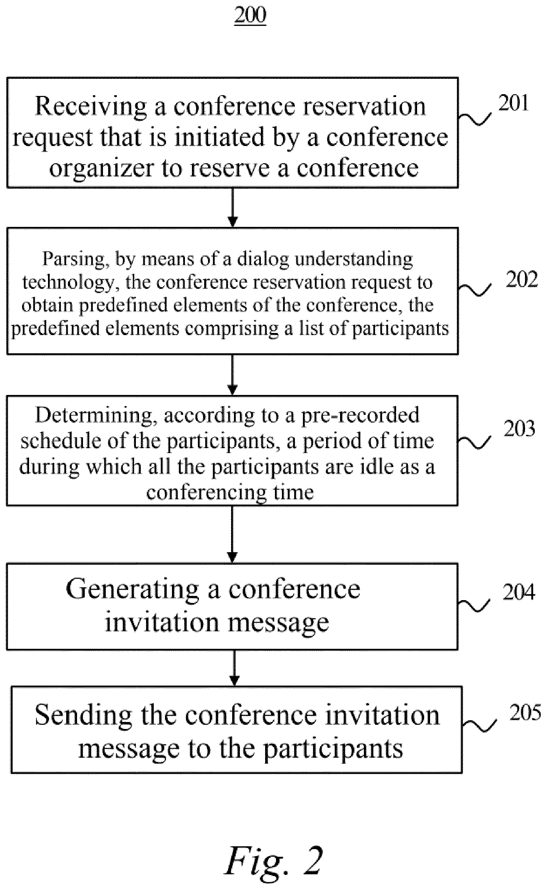

Fig. 2 shows a flowchart of a computer-implemented conference reservation method 200 according to an exemplary embodiment of the present disclosure. As shown in Fig. 2, the conference reservation method 200 may comprise: receiving a conference reservation request that is initiated by a conference organizer to reserve a conference (step 201); parsing, by means of a dialog understanding technology, the conference reservation request to obtain predefined elements of the conference, the predefined elements comprising a list of participants (step 202); determining, according to a pre-recorded schedule of the participants, a period of time during which all the participants are idle as a conferencing time (step 203); generating a conference invitation message (step 204); and sending the conference invitation message to the participants (step 205).

By means of the conference reservation method 200, during the entire process of determining a conferencing time, a conference organizer only needs to inform a conference reservation apparatus, such as an intelligent session robot, of a conference reservation request, and the conference reservation apparatus makes coordination and determines the conferencing time, so that the time and effort of the conference organizer are reduced. Moreover, since the final conferencing time is determined with reference to the idle time of the participants, the work of the participants is not delayed, and the user experience is improved.

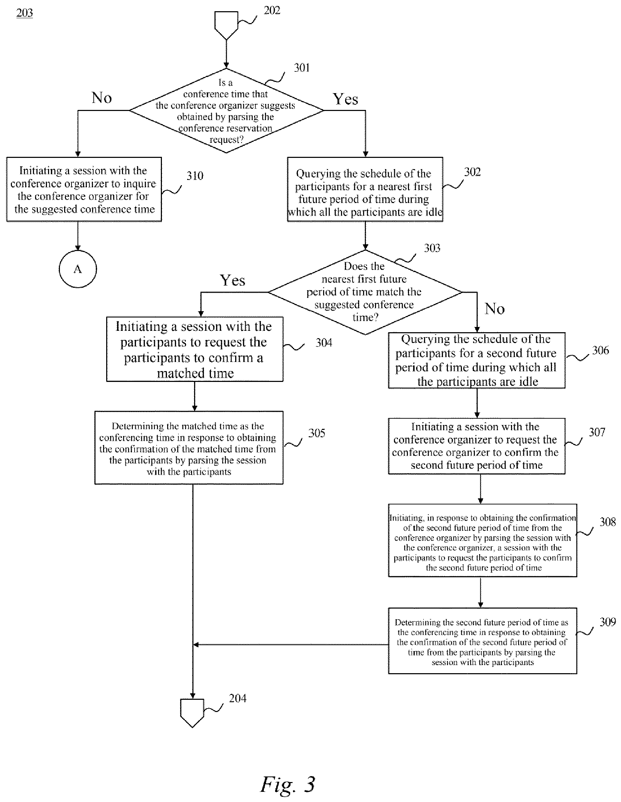

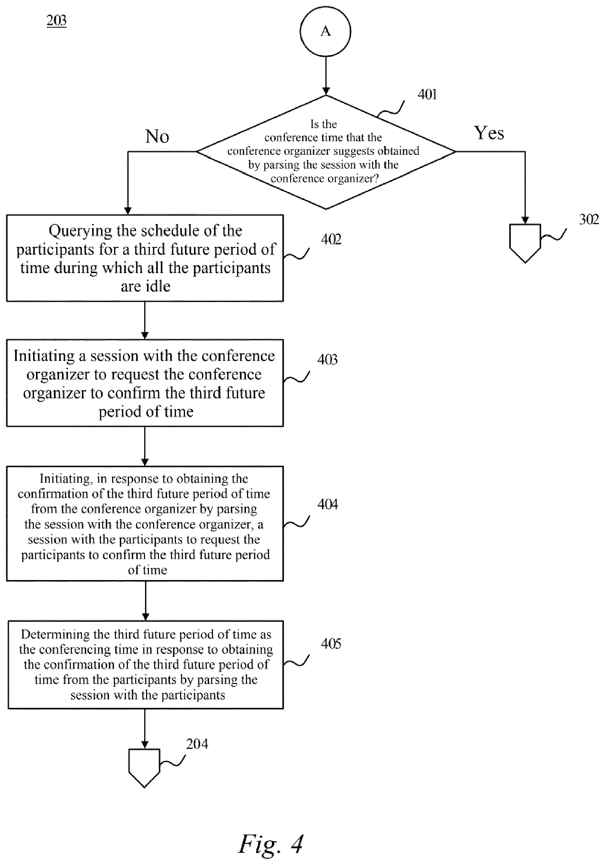

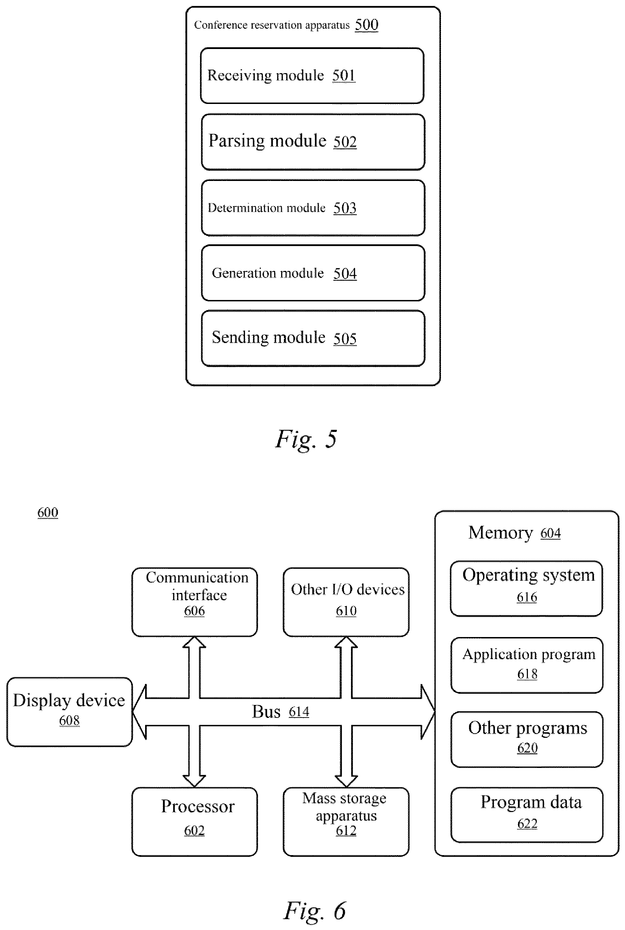

Figs. 3 and 4 show flowcharts of example processes of step 203 of determining a conferencing time in the method 200, and Fig. 5 shows a schematic block diagram of a conference reservation apparatus 500 according to an exemplary embodiment of the present disclosure. In some embodiments, the conference reservation apparatus 500 may be configured to perform the method 200.

For the purpose of illustration, the method 200 is described in detail below in conjunction with Figs. 2 to 5.

In step 201, a conference reservation request that is initiated by the conference organizer 101 to reserve a conference is received.

In some embodiments, step 201 may be performed by a receiving module 501 in the conference reservation apparatus 500. The conference organizer 101 may input the conference reservation request in any way. In some examples, the conference organizer 101 may input the conference reservation request by way of a text, a speech, or a combination of a text and a speech.

In step 202, the conference reservation request is parsed, by means of a dialog understanding technology, to obtain predefined elements of the conference.

Step 202 may involve the following technologies for natural language processing:
(1) Intent detection. A rule-based method (e.g. combined semantic derivation) may be employed to detect the intent expressed by the conference reservation request, for example, by matching fragments in the conference reservation request with a summarized template. A machine learning method (e.g. classification model) may also be employed to perform intent classification for the conference reservation request. It can be a multi-classification, or a plurality of binary classifications.
(2) Slot extraction. A named entity recognition (NER) technology may be used to extract slots contained in the conference reservation request, for example, by employing a rule-based method (e.g. dictionary matching) and a machine learning method (e.g. sequence labeling model).
(3) Positive and negative attitude detection. A machine learning method (e.g. classification model) may be employed to detect the positive or negative attitude expressed by a user, for example, in the procedures of confirming the conference time and confirming whether to issue a conference invitation.

In some embodiments, step 202 may be performed by a parsing module 502 in the conference reservation apparatus 500. After the conference reservation request input by the conference organizer 101 is received, the conference reservation request may be parsed by means of the dialog understanding technology. In one example, when the conference organizer 101 inputs the conference reservation request by way of a text, semantic understanding can be performed, by means of the dialog understanding technology, on the text input by the conference organizer 101 in each round of dialog, so as to obtain, by parsing, information such as the intent expressed in and slots contained in the text. For example: "Help me make an appointment with Zhang San for a project communication conference at 4 pm.", after dialog understanding, the intent of this sentence can be parsed as: conference reservation, with slots: Zhang San (participant), 4 pm (conference time), project communication conference (conference theme). In another example, when the conference organizer 101 inputs the conference reservation request by way of a speech, the request may also be recognized by means of a speech recognition technology. For example, a speech recognition model may be pre-trained, after a speech signal input by the conference organizer 101 is received, corresponding characteristic information is extracted from the speech signal, and the characteristic information is input into the speech recognition model for matching, so that speech information of the conference organizer 101 is acquired. Furthermore, the speech information is parsed to obtain the predefined elements of the conference.

In some embodiments, when a conference is organized, it is necessary to know the persons who are to participate in the conference (that is, a list of participants 102), and the predefined elements of the conference that are obtained by parsing should comprise the list of participants 102. In some examples, the list of participants 102 may include the name, abbreviation, nickname of the participant 102, or any information used to indicate the identity of the participant 102, which is not limited in the present disclosure. In some embodiments, when the list of participants 102 fails to be obtained by parsing the conference reservation request, a session may be initiated to the conference organizer 101 to inquire same for the list of participants 102.

In some embodiments, when a conference is organized, it is also necessary to know the conference theme in addition to the persons who are to participate in the conference. Therefore, the predefined elements of the conference that are obtained by parsing should comprise the conference theme, so that the participants 102 may have a preliminary understanding of the conference from the conference theme. For example, the participants 102 may have a preliminary understanding of the nature of the conference (e.g. a training conference, a discussion conference, a notification conference, an annual conference, etc.) and the importance of the conference from the conference theme. In some embodiments, when the conference theme fails to be obtained by parsing the conference reservation request, a session may be initiated to the conference organizer 101 to inquire same for the conference theme. In addition, when the conference theme is known and a conference invitation message is subsequently sent to the participants 102, the conference theme can be specified in the conference invitation message.

In some embodiments, when a conference is organized, it is also necessary to know a conferencing site. For example, offline conferences organized within a company are usually held in a conference room, and when there are a plurality of conference rooms in the company, a specific conference room (i.e. conference site) needs to be specified. In other examples, for an online conference, for example a cloud conference such as a telephone conference and a video conference, it may not be necessary to know the conferencing site.

In step 203, according to a pre-recorded schedule of the participants 102, a period of time during which all the participants 102 are idle is determined as a conferencing time.

In some embodiments, step 203 may be performed by a determination module 503 in the conference reservation apparatus 500. It will be appreciated that when a conference is organized, another key element is the conferencing time. The schedule of each participant 102 can be retrieved in advance, so as to determine a period of time during which the participant is idle. In some examples, the schedule of the participant 102 may be, for example, outlook, calendar, or other software or components used to record the schedule of the participant 102. The conferencing time may be determined with reference to the idle period of time, with an attempt that each participant 102 is as idle as possible during the period of time for conferencing, and thus no influence or delay is caused to their work.

In step 204, a conference invitation message is generated.

In some embodiments, step 204 may be performed by a generation module 504 in the conference reservation apparatus 500. In some examples, after the conferencing time (and optionally, information such as the conference theme and/or the conference site) is determined, the conference invitation message may be generated based on these pieces of information.

In step 205, the conference invitation message is sent to the participants 102.

In some embodiments, step 205 may be performed by a sending module 505 in the conference reservation apparatus 500. In some examples, after the conference invitation message is generated, the conference invitation message may be sent to each participant 102 to notify the participant to participate in the conference. The conference invitation message may comprise the conferencing time (and optionally, information such as the conference theme and/or the conference site), so that the participants 102 have an understanding of the relevant content of the conference and participate in the conference on time and with preparation.

Figs. 3 and 4 show example processes of step 203 of determining a conferencing time in the method 200. Related operations for determining the conferencing time are introduced below in conjunction with Figs. 3 and 4.

In step 301, it is determined whether a conference time that the conference organizer 101 suggests is obtained by parsing the conference reservation request. Step 302 will be performed if so, otherwise, step 310 will be performed.

In some examples, after the conference reservation request that is initiated by the conference organizer 101 to reserve a conference is received, the request may be parsed to determine whether the conference organizer 101 specifies, in the request, the conference time (i.e. the conference time that the conference organizer 101 suggests). If the conference organizer 101 has specified the conference time, then based on the time, follow-up related procedures such as coordination with the participants 102 and determination of the conferencing time may be carried out, which may, for example, comprise steps 302 to 309. If the conference organizer 101 has not specified the conference time, a session may be initiated to the conference organizer 101 to confirm whether the conference organizer is to specify the conference time, and then based on the session result (e.g. depending on whether the conference time is specified or not), the follow-up related procedures are carried out, which may, for example, comprise steps 310, and 401 to 405.

In step 302, the schedule of the participants is queried for a nearest first future period of time during which all the participants 102 are idle.

In some examples, the outlook of each participant 102 may be retrieved to make a query for a future period of time during which the participant is idle. Then, the nearest first future period of time during which all the participants 102 are idle is acquired from the future periods of time during which all the participants 102 are idle.

In step 303, it is determined whether the nearest first future period of time matches the conference time that the conference organizer 101 suggests. Step 304 will be performed if so, otherwise, step 306 will be performed.

In some examples, after acquiring the conference time that the conference organizer 101 suggests and the nearest first future period of time during which all the participants 102 are idle, it is also necessary to determine whether the two match. In one example, the match between the nearest first future period of time and the conference time that the conference organizer 101 suggests means that the conference period of time that the conference organizer suggests is within the nearest first future period of time. By way of example, the conference time that the conference organizer suggests is 10:00 to 11:00 am, on May 10, 2020, and the nearest first future period of time during which all the participants 102 are idle is 9:00 to 12:00 am, on May 10, 2020. In this case, it can be determined that the nearest first future period of time during which all the participants 102 are idle matches the conference time that the conference organizer 101 suggests.

In step 304, a session with the participants 102 is initiated to request the participants 102 to confirm a matched time.

In one example, when the conference period of time that the conference organizer 101 suggests is within the nearest first future period of time during which all the participants 102 are idle, that is, the nearest first future period of time matches the conference time that the conference organizer 101 suggests, the matched time is the conference time that the conference organizer 101 suggests.

In some embodiments, depending on the manner in which the conference organizer 101 sends the conference reservation request, the manner in which the session is initiated to the participants 102 may also vary. In some examples, initiating a session with the participants 102 comprises: collectively initiating a session with the participants 102 in a shared online space in response to the conference reservation request being initiated by the conference organizer 101 from the shared online space, wherein the conference organizer 101 and the participants 102 are all in the shared online space. In other examples, initiating a session with the participants 102 comprises: separately initiating a session with each participant 102 of the participants 102 in response to the conference reservation request being initiated by the conference organizer 101 from a non-shared online space.

In some examples, the shared online space may be understood as a group of instant messaging software (e.g. Infoflow, WeChat, QQ, Facebook, etc.), such as an Infoflow group, a WeChat group, a QQ group, and a Facebook group. The scenario where the conference organizer 101 and the participants 102 are all in a shared online space may refer to the one where the conference organizer 101 and the participants 102 are in the same group, and the session in this scenario is a group chat. At this time, collectively initiating a session with the participants 102 in the shared online space may refer to initiating a chat (session) with the participants 102 in the group, for example, @ (speaking to) the participants 102 in the group. When the conference organizer 101 and the participants 102 are not in the same group, the session in this scenario is a single chat. In this case, separately initiating a session with each participant 102 of the participants 102 may refer to opening a new dialog window to perform a chat (dialog) with the participant 102.

In step 305, the matched time is determined as the conferencing time in response to obtaining the confirmation of the matched time from the participants 102 by parsing the session with the participants 102.

In some examples, the participants 102 may be also temporarily given other tasks in the idle period of time registered in the schedule table. After it is determined that the conference time that the conference organizer 101 suggests matches the nearest first future period of time during which all the participants 102 are idle, a communication with each participant 102 is also carried out to confirm whether the participant can participate in the conference within the matched time. If all the participants 102 can participate in the conference within the matched time (that is, the participants 102 confirm the matched time), the matched time is determined as the conferencing time. Accordingly, the conference can be held as much as possible at the time when all the participants 102 are idle, without affecting and delaying the work of the participants 102, and thus improving the user experience. In addition, through communication and confirmation with each participant 102, the interaction with the participant 102 is increased, so that the participant 102 participates in the process of determining the conference time, thereby improving the user experience.

As described above, after acquiring the conference time that the conference organizer 101 suggests and the nearest first future period of time during which all the participants 102 are idle, it is also necessary to determine whether the two match. The process of determining the conferencing time where the nearest first future period of time during which all the participants 102 are idle matches the conference time that the conference organizer 101 suggests is described above. In practice, the nearest first future period of time during which all the participants 102 are idle may not match the conference time that the conference organizer 101 suggests. In this case, some participants 102 may not be able to participate in the conference. In order not to affect or delay the work of these participants 102, a future period of time during which all the participants 102 are idle can be recommended to the conference organizer 101 for reference by the conference organizer 101. In some examples, the process of recommending, to the conference organizer 101, a future period of time during which all the participants are idle may comprise steps 306 to 309.

In step 306, the schedule of the participants 102 is queried for a second future period of time during which all the participants 102 are idle.

In step 307, a session with the conference organizer 101 is initiated to request the conference organizer 101 to confirm the second future period of time.

In step 308, in response to obtaining the confirmation of the second future period of time from the conference organizer 101 by parsing the session with the conference organizer 101, a session with the participants 102 is initiated to request the participants 102 to confirm the second future period of time.

In step 309, the second future period of time is determined as the conferencing time in response to obtaining the confirmation of the second future period of time from the participants 102 by parsing the session with the participants 102.

As previously described, during the process of initiating, when the suggested conference time fails to be obtained by parsing the conference reservation request initiated by the conference organizer 101, a session to the conference organizer 101 to inquire whether the conference organizer is to specify the conference time (i.e. the conference time that the conference organizer 101 suggests), the conference organizer 101 may still not specify the conference time, or the conference organizer 101 may want to determine the conference time after learning about the period of time during which the participants 102 are idle. In this case, a future period of time during which all the participants 102 are idle can be actively recommended to the conference organizer 101 for reference. In some examples, this process may comprise steps 310, and 401 to 405.

In step 310, a session with the conference organizer 101 is initiated to inquire the conference organizer 101 for the suggested conference time.

In step 401, it is determined whether the conference time that the conference organizer 101 suggests is obtained by parsing the session with the conference organizer 101, and step 302 above will be performed if so, otherwise, step 402 will be performed.

In step 402, the schedule of the participants 102 is queried for a third future period of time during which all the participants 102 are idle.

In step 403, a session with the conference organizer 101 is initiated to request the conference organizer 101 to confirm the third future period of time.

In step 404, in response to obtaining the confirmation of the third future period of time from the conference organizer 101 by parsing the session with the conference organizer 101, a session with the participants 102 is initiated to request the participants 102 to confirm the third future period of time.

In step 405, the third future period of time is determined as the conferencing time in response to obtaining the confirmation of the third future period of time from the participants 102 by parsing the session with the participants 102.

In some examples, the processes of making a query for the second future period of time during which all the participants 102 are idle in step 306 and making a query for the third future period of time during which all the participants 102 are idle in step 402 are similar to that of making a query for the first future period of time during which all the participants 102 are idle in step 302, and the processes of confirming the time by the participants 102 in steps 308 and 309, and in steps 404 and 405 are similar to the process of confirming the time by the participants 102 in steps 304 and 305, and will not be repeated herein. In some embodiments, steps 301 and 401 above may be performed by the parsing module 502 in the apparatus 500, and steps 302 to 310 and 402 to 405 may be performed by the determination module 503 in the apparatus 500.

Some examples of all the participants 102 making a positive confirmation on a temporary conferencing time when a session is initiated with the participants 102 to request same to confirm the temporary conferencing time (for example, the matched time, the second future period of time, and the third future period of time) are described above. In other examples, there are cases where some participants 102 have not confirmed the temporary conferencing time, or some participants 102 have given suggestions on the conference time.

In some examples, determining a period of time during which all the participants 102 are idle as a conferencing time further comprises the operations as follows: in response to one of the following events: (1) failing to obtain the confirmation from the participants 102 by parsing the session with the participants 102, or (2) obtaining the conference time that the participants 102 suggest by parsing the session with the participants 102, performing operations, the operations comprising: querying the schedule of the participants 102 for one future period of time during which all the participants 102 are idle, and requesting the participants 102 to confirm the future period of time in the session with the participants 102; initiating, in response to obtaining the confirmation of the future period of time from the participants 102 by parsing the session with the participants 102, a session with the conference organizer 101 to request the conference organizer 101 to confirm the future period of time; and determining the future period of time as the conferencing time in response to obtaining the confirmation of the future period of time from the conference organizer 101 by parsing the session with the conference organizer 101.

In some examples, there may be a plurality of participants 102 who have suggested a conference time. In this case, it is also possible to match the common idle period of time separately in a time sequence. Determining a period of time during which all the participants 102 are idle as a conferencing time may further comprise: in response to obtaining a plurality of conference periods of time that the participants 102 suggest by parsing the session with the participants 102 and in a time sequence of the plurality of conference periods of time, querying the schedule of the participants 102 for a matched future period of time during which all the participants 102 are idle, and requesting the participants 102 to confirm the matched future period of time in the session with the participants 102; initiating, in response to obtaining the confirmation of the matched future period of time from the participants 102 by parsing the session with the participants 102, a session with the conference organizer 101 to request the conference organizer 101 to confirm the matched future period of time; and determining the matched future period of time as the conferencing time in response to obtaining the confirmation of the matched future period of time from the conference organizer 101 by parsing the session with the conference organizer 101.

In some embodiments, the above-mentioned operation of confirming the conference time (including confirming the corresponding time by the conference organizer 101 and the participants 102) may be implemented by means of a positive and negative attitude detection technology. With regard to the positive and negative attitude detection, a machine learning method (classification model) is mainly employed to detect the positive or negative attitude expressed by a user (e.g. the conference organizer 101, the conference participants 102). In addition, the operation of the session with the conference organizer 101 and the conference participants 102 may be implemented by means of a multi-round dialog management technology. The multi-round dialog management refers to being responsible for integrating the result (information such as an intent and slots) of each round of dialog understanding to maintain the dialog state of the entire multi-round dialog, and deciding, by dialog state tracking, system action generation, natural language generation, etc., what type of business procedure should be performed in the current round of dialog, and how the intelligent session robot should respond to. For example, after the conference organizer 101 initiates a conference reservation request, an intelligent conference system or the intelligent session robot will actively initiate a session to the conference organizer 101 to collect predefined elements of the conference (e.g. participants 102, a conference time, a conference theme, etc.), and after collection of these predefined elements, an Infoflow intelligent conference system or the intelligent session robot actively broadcasts the content of the conference and sends same to each participant 102 for confirmation.

The computer-implemented conference reservation method 200 according to an exemplary embodiment of the present disclosure has been described above in conjunction with the conference reservation apparatus 500. Although the various operations are depicted in the drawings in a particular order, this should not be understood as requiring that these operations must be performed in the particular order shown or in a sequential order, nor should it be understood that all operations shown must be performed to obtain the desired result.

The conference reservation apparatus 500 according to an exemplary embodiment of the present disclosure is described below. As shown in Fig. 5, the conference reservation apparatus 500 comprises a receiving module 501, a parsing module 502, a determination module 503, a generation module 504, and a sending module 505.

The receiving module 501 is configured to receive a conference reservation request that is initiated by a conference organizer to reserve a conference. The conference reservation request may be a text input or a speech input from the conference organizer.

The parsing module 502 is configured to parse, by means of a dialog understanding technology, the conference reservation request to obtain predefined elements of the conference. The predefined elements may comprise a list of participants.

The determination module 503 is configured to determine, according to a pre-recorded schedule of the participants, a period of time during which all the participants are idle as a conferencing time.

The generation module 504 is configured to generate a conference invitation message, the conference invitation message specifying the conferencing time.

The sending module 505 is configured to send the conference invitation message to the participants.

By means of the conference reservation apparatus 500, during the entire process of determining a conferencing time, a conference organizer only needs to inform the conference reservation apparatus 500 (e.g. an intelligent session robot) of a conference reservation request, and the conference reservation apparatus 500 makes coordination and determines the conferencing time, so that the time and effort of the conference organizer are reduced. Moreover, since the final conferencing time is determined with reference to the idle time of the participants, the work of the participants is not delayed, and the user experience is improved.

Examples of the conference reservation apparatus 500 may comprise, for example, an intelligent session robot, an intelligent conference system, etc. The modules of the conference reservation apparatus 500 have been described in detail above in conjunction with the method 200, and will not be repeated here for the sake of brevity.

Although specific functions are discussed above with reference to specific modules, it should be noted that the functions of the various modules discussed herein may be divided into a plurality of modules, and/or at least some functions of a plurality of modules may be combined into a single module. The specific module performing actions discussed herein comprises this specific module performing the action itself, or alternatively, this specific module invoking or otherwise accessing another component or module that performs the action (or performs the action together with this specific module). Thus, the specific module performing the action may comprise this specific module performing the action itself and/or another module that this specific module invokes or otherwise accesses to perform the action.

More generally, various technologies may be described herein in the general context of software and hardware elements or program modules. The various modules described above with respect to Fig. 5 may be implemented in hardware or in hardware incorporating software and/or firmware. For example, these modules may be implemented as computer program code/instructions configured to be executed in one or more processors and stored in a computer-readable storage medium. Alternatively, these modules may be implemented as hardware logic/circuitry. For example, in some embodiments, one or more of the receiving module 501, the parsing module 502, the determination module 503, the generation module 504, and the sending module 505 may be implemented together in a system on chip (SoC). The SoC may comprise an integrated circuit chip (which comprises a processor (e.g., a central processing unit (CPU), a micro-controller, a microprocessor, a digital signal processor (DSP), etc.), a memory, one or more communication interfaces, and/or one or more components in other circuits), and may optionally execute the received program code and/or comprise embedded firmware to perform functions.

One aspect of the present disclosure provides an electronic device. The electronic device may comprise: a processor; and a memory storing a program, the program comprising instructions that, when executed by the processor, cause the processor to perform any of the methods above.

One aspect of the present disclosure provides a computer-readable storage medium storing a program, the program comprising instructions that, when executed by a processor of an electronic device, cause the electronic device to perform any of the methods above.

Examples of such an electronic device and computer-readable storage medium are described below with reference to Fig. 6.

Fig. 6 shows an example configuration of a computing device 600 that may be used to implement the modules and functions described herein. The computing device 600 may be various different types of devices, for example, a server from a service provider, a device associated with a client (e.g. a client device), a system on chip, and/or any other suitable computing device or computing system. Examples of the computing device 600 include, but are not limited to: a desktop computer, a server computer, a laptop computer or a netbook computer, a mobile device (e.g. a tablet computer or a phablet device, cellular or other wireless phones (e.g. smart phones), a notebook computer, a mobile station), a wearable device (e.g. glasses, a watch), an entertainment device (e.g. an entertainment appliance, a set-top box communicatively coupled to a display device, a game console), a television or other display devices, a car computer, etc. Therefore, the computing device 600 can range from full-resource devices with substantial memory and processor resources (e.g. personal computers, game consoles) to low-resource devices with limited memory and/or processing resources (e.g. traditional set-top boxes, handheld game consoles).

The computing device 600 may comprise at least one processor 602, memory 604, communication interface(s) 606, a display device 608, other input/output (I/O) devices 610 and one or more mass storage devices 612 that can communicate with each other, such as through a system bus 614 or other appropriate connections.

The processor 602 may be a single processing unit or a plurality of processing units, and all the processing units may comprise a single computing unit or a plurality of computing units or a plurality of cores. The processor 602 may be implemented as one or more microprocessors, microcomputers, micro-controllers, digital signal processors, central processing units, state machines, logic circuits, and/or any devices that manipulate signals based on operation instructions. In addition to other capabilities, the processor 602 may be configured to acquire and execute computer-readable instructions stored in the memory 604, the mass storage device 612, or other computer-readable media, such as program code of an operating system 616, program code of an application program 618, program code of other programs 620, etc.

The memory 604 and the mass storage device 612 are examples of the computer storage medium used for storing instructions, and the instructions are executed by the processor 602 to implement the various functions described above. By way of example, the memory 604 may generally comprise both volatile memory and non-volatile memory (e.g. RAM, ROM, etc.). In addition, the mass storage device 612 may generally comprise a hard disk drive, a solid state drive, a removable medium, including external and removable drives, a memory card, a flash memory, a floppy disk, an optical disk (e.g. CD, DVD), a storage array, a network attached storage, a storage area network, etc. The memory 604 and the mass storage device 612 may be collectively referred to herein as a memory or a computer storage medium, and may be a non-transitory medium capable of storing computer-readable and processor-executable program instructions as computer program code. The computer program code may be executed by the processor 602 as a specific machine configured to implement the operations and functions described in the examples herein.

A plurality of program modules may be stored on the mass storage device 612. These programs comprise an operating system 616, one or more application programs 618, other programs 620, and program data 622, and they may be loaded onto the memory 604 for execution. Examples of such application programs or program modules may comprise, for example, computer program logic (e.g. computer program code or instructions) for implementing the following components/functions: the receiving module 501, the parsing module 502, the determination module 503, the generation module 504, and the sending module 505, the method 200 (including any suitable step of the method 200, such as steps 301 to 310 and 401 to 405), and/or other embodiments described herein.

Although shown in Fig. 6 as being stored in the memory 604 of the computing device 600, the modules 616, 618, 620, and 622 or parts thereof may be implemented using any form of computer-readable medium that is accessible by the computing device 600. As used herein, "computer-readable medium" comprises at least two types of computer-readable media, that is, a computer storage medium and a communication medium.

The computer storage medium comprises volatile and nonvolatile, removable and non-removable media implemented by any method or technology for storage of information, such as computer-readable instructions, data structures, program modules, or other data. The computer storage medium includes, but is not limited to, RAM, ROM, EEPROM, a flash memory or other memory technologies, CD-ROM, a digital versatile disk (DVD), or other optical storage apparatuses, a magnetic cassette, a tape, a disk storage apparatus or other magnetic storage devices, or any other non-transmission media that can be used to store information for access by a computing device.

In contrast, the communication medium may specifically implement computer-readable instructions, data structures, program modules, or other data in a modulated data signal, such as a carrier wave or other transmission mechanisms. The computer storage medium as defined herein does not include the communication medium.

The computing device 600 may also comprise one or more communication interfaces 606 for exchange of data with other devices, such as through a network and a direct connection, as previously discussed. Such a communication interface can be one or more of the following: any type of network interface (e.g. a network interface card (NIC)), a wired or wireless (such as IEEE 802.11 wireless LAN (WLAN)) wireless interface, a world interoperability for microwave access (Wi-MAX) interface, an Ethernet interface, a universal serial bus (USB) interface, a cellular network interface, a Bluetooth^{™} interface, a near field communication (NFC) interface, etc. The communication interface 606 can facilitate communication within a variety of networks and protocol types, including wired networks (such as LAN, cable, etc.) and wireless networks (such as WLAN, cellular, satellite, etc.), the Internet, etc. The communication interface 606 may also provide communication with an external storage apparatus (not shown) in a storage array, a network attached storage, a storage area network, etc.

In some examples, the display device 608 such as a monitor may be comprised for displaying information and images to a user. The other I/O devices 610 may be devices that receive various inputs from a user and provide various outputs to the user, and may comprise a touch input device, a gesture input device, a camera, a keyboard, a remote controller, a mouse, a printer, audio input/output devices, etc.

Although the present disclosure has been illustrated and described in detail in the drawings and the foregoing description, such illustration and description should be considered illustrative and schematic, rather than limiting; and the present disclosure is not limited to the disclosed embodiments. By studying the drawings, the disclosure, and the appended claims, those skilled in the art can understand and implement modifications to the disclosed embodiments when practicing the claimed subject matter. In the claims, the word "comprising" does not exclude other elements or steps not listed, the indefinite article "a" or "an" does not exclude plural, and the term "a plurality of' means two or more. The mere fact that certain measures are recited in mutually different dependent claims does not indicate that a combination of these measures cannot be used to get benefit.

## Claims

1. A computer-implemented conference reservation method, comprising:
receiving (201) a conference reservation request that is initiated by a conference organizer to reserve a conference, the conference reservation request being a text input or a speech input from the conference organizer;
parsing (202), by means of a dialog understanding technology, the conference reservation request to obtain predefined elements of the conference, the predefined elements comprising a list of participants;
determining (203), according to a pre-recorded schedule of the participants, a period of time during which all the participants are idle as a conferencing time;
generating (204) a conference invitation message, the conference invitation message specifying the conferencing time; and
sending (205) the conference invitation message to the participants.

2. The method according to claim 1, wherein parsing, by means of a dialog understanding technology, the conference reservation request to obtain predefined elements of the conference comprises:
initiating, in response to failing to obtain the list of participants by parsing the conference reservation request, a session with the conference organizer to inquire the conference organizer for the list of participants.

3. The method according to claim 1,
wherein the predefined elements further comprise a conference theme,
wherein parsing, by means of a dialog understanding technology, the conference reservation request to obtain predefined elements of the conference comprises:
initiating, in response to failing to obtain the conference theme by parsing the conference reservation request, a session with the conference organizer to inquire the conference organizer for the conference theme, and
wherein generating a conference invitation message comprises:
specifying the conference theme in the conference invitation message.

4. The method according to claim 1,
wherein the predefined elements further comprise a conference time that the conference organizer suggests, and
wherein parsing, by means of a dialog understanding technology, the conference reservation request to obtain predefined elements of the conference comprises:
initiating, in response to failing to obtain the suggested conference time by parsing the conference reservation request, a session with the conference organizer to inquire the conference organizer for the suggested conference time.

5. The method according to claim 4, wherein determining a period of time during which all the participants are idle as a conferencing time comprises:
querying, in response to having obtained the suggested conference time by parsing the conference reservation request or in response to having obtained the suggested conference time by parsing the session with the conference organizer, the schedule of the participants for a nearest first future period of time during which all the participants are idle;
initiating, in response to the nearest first future period of time matching the suggested conference time, a session with the participants to request the participants to confirm a matched time; and
determining the matched time as the conferencing time in response to obtaining a confirmation of the matched time from the participants by parsing the session with the participants.

6. The method according to claim 5, wherein determining a period of time during which all the participants are idle as a conferencing time further comprises:
querying, in response to the nearest first future period of time failing to match the suggested conference time, the schedule of the participants for a second future period of time during which all the participants are idle;
initiating a session with the conference organizer to request the conference organizer to confirm the second future period of time;
initiating, in response to obtaining a confirmation of the second future period of time from the conference organizer by parsing the session with the conference organizer, a session with the participants to request the participants to confirm the second future period of time; and
determining the second future period of time as the conferencing time in response to obtaining a confirmation of the second future period of time from the participants by parsing the session with the participants.

7. The method according to claim 4, wherein determining a period of time during which all the participants are idle as a conferencing time comprises:
querying, in response to failing to obtain the suggested conference time by parsing the conference reservation request and in response to failing to obtain the suggested conference time by parsing the session with the conference organizer, the schedule of the participants for a third future period of time during which all the participants are idle;
initiating a session with the conference organizer to request the conference organizer to confirm the third future period of time;
initiating, in response to obtaining a confirmation of the third future period of time from the conference organizer by parsing the session with the conference organizer, a session with the participants to request the participants to confirm the third future period of time; and
determining the third future period of time as the conferencing time in response to obtaining a confirmation of the third future period of time from the participants by parsing the session with the participants.

8. The method according to any one of claims 5 to 7, wherein determining a period of time during which all the participants are idle as a conferencing time further comprises:
in response to one of the following events: failing to obtain a confirmation from the participants by parsing the session with the participants, or obtaining the conference time that the participants suggest by parsing the session with the participants, performing operations, the operations comprising:
querying the schedule of the participants for one future period of time during which all the participants are idle, and requesting the participants to confirm the future period of time in the session with the participants;
initiating, in response to obtaining a confirmation of the future period of time from the participants by parsing the session with the participants, a session with the conference organizer to request the conference organizer to confirm the future period of time; and
determining the future period of time as the conferencing time in response to obtaining a confirmation of the future period of time from the conference organizer by parsing the session with the conference organizer.

9. The method according to claim 8, wherein determining a period of time during which all the participants are idle as a conferencing time further comprises:
in response to obtaining a plurality of conference periods of time that the participants suggest by parsing the session with the participants, querying, in a time sequence of the plurality of conference periods of time, the schedule of the participants for a matched future period of time during which all the participants are idle, and requesting the participants to confirm the matched future period of time in the session with the participants;
initiating, in response to obtaining a confirmation of the matched future period of time from the participants by parsing the session with the participants, a session with the conference organizer to request the conference organizer to confirm the matched future period of time; and
determining the matched future period of time as the conferencing time in response to obtaining a confirmation of the matched future period of time from the conference organizer by parsing the session with the conference organizer.

10. The method according to claim 5, wherein initiating a session with the participants comprises:
collectively initiating the session with the participants in a shared online space in response to the conference reservation request being initiated by the conference organizer from the shared online space,
wherein the conference organizer and the participants are all in the shared online space.

11. The method according to claim 5, wherein initiating a session with the participants comprises:
separately initiating a session with each of the participants in response to the conference reservation request being initiated by the conference organizer from a non-shared online space.

12. A conference reservation apparatus (500), comprising:
a receiving module (501) configured to receive a conference reservation request that is initiated by a conference organizer to reserve a conference, the conference reservation request being a text input or a speech input from the conference organizer;
a parsing module (502) configured to parse, by means of a dialog understanding technology, the conference reservation request to obtain predefined elements of the conference, the predefined elements comprising a list of participants;
a determination module (503) configured to determine, according to a pre-recorded schedule of the participants, a period of time during which all the participants are idle as a conferencing time;
a generation module (504) configured to generate a conference invitation message, the conference invitation message specifying the conferencing time; and
a sending module (505) configured to send the conference invitation message to the participants.

13. The apparatus according to claim 12, wherein the parsing module (502) is further configured to:
initiate, in response to failing to obtain the list of participants by parsing the conference reservation request, a session with the conference organizer to inquire the conference organizer for the list of participants.

14. A computer program product comprising instructions which, when the program is executed by a computer, cause the computer to carry out the method according to any one of claims 1 to 11.

15. A computer-readable storage medium storing a program, the program comprising instructions that, when executed by a processor of an electronic device, cause the electronic device to perform a computer-implemented conference reservation method according to any one of claims 1 to 11.
